# EUROPÄISCHE PATENTSCHRIFT

(11) **EP 1 149 715 B1**
(45) Veröffentlichungstag und Bekanntmachung des Hinweises auf die Patenterteilung: **13.04.2005**
(21) Anmeldenummer: 01110019.5
(22) Anmeldetag: 26.04.2001
(51) Int. Cl.: B60G 17/052

(54) **Luftfederungsanlage**
Air spring installation for vehicles
Installation de ressort pneumatique pour véhicules

(30) Priorität: 26.04.2000 DE 10020349
(43) Veröffentlichungstag der Anmeldung: 31.10.2001
(73) Patentinhaber: KNORR-BREMSE SYSTEME FÜR NUTZFAHRZEUGE GMBH, 80809 München (DE)
(72) Erfinder: Karthäuser, Klaus, 71723 Grossbottwar (DE)

(56) Entgegenhaltungen:
- EP-A- 0 779 168
- DE-A- 3 815 614
- DE-A- 19 546 324
- US-A- 4 238 128
- US-A- 4 695 074
- PATENT ABSTRACTS OF JAPAN vol. 010, no. 105 (M-471), 19. April 1986 (1986-04-19) & JP 60 236817 A (SANWA SEIKI KK), 25. November 1985 (1985-11-25)
- PATENT ABSTRACTS OF JAPAN vol. 010, no. 191 (M-495), 4. Juli 1986 (1986-07-04) & JP 61 036007 A (HINO MOTORS LTD), 20. Februar 1986 (1986-02-20)

## Beschreibung

Die Erfindung betrifft eine Luftfederungsanlage für Fahrzeuge gemäß Oberbegriff des Anspuchs 1.

Derartige Luftfederungsanlagen sind bekannt. So offenbart beispielsweise die DE 43 27 763 A1 eine Luftfederungsanlage für Omnibusse des öffentlichen Nahverkehrs, bei der mindestens ein Weggeber und mindestens ein zusätzliches 2/2-Wege-Magnetventil verwendet wird, um den Federbalg des rechten Vorderrades oder in den Federbälgen der rechten Fahrzeugseite den Druck zum Erleichtern des Ein- und Aussteigens auf ein definiertes Niveau abzusenken, das aber noch so hoch ist, das sich der Wagenkasten nicht auf seine Anschlag-Puffer aufsetzt.

Bei derartigen elektronischen Luftfederungsanlagen für Omnibusse ist es üblich die Anlagen dreikreisig auszuführen. Hierbei läßt sich an der Hinterachse das Fahrzeugniveau rechts und links individuell regeln, da hierfür jeweils ein Kreis verwendet wird. Zudem kann an der Vorderachse das jeweilige Fahrzeugniveau gemeinsam geregelt werden. Diese Maßnahme dient dazu, interne Verspannungen des Fahrzeugs, die sich bei einer 4-Punkt-Regelung unweigerlich ergeben würden, sobald sich das Fahrzeug auf unebenem Grund befindet bzw. bewegt, vermieden werden. Hierzu werden die Luftfederbälge der Vorderachse auch in nicht aktiviertem Zustand des Steuerventils über eine kleine Ausgleichsbohrung miteinander verbunden. Die entsprechende Ausgleichsbohrung in der DE 43 27 763 A1 befindet sich in dem dort mit Bezugsziffer 18 dargestellten Steuerventil.

Durch diese Maßnahme wird sichergestellt, daß bei einer an der Hinterachse erfolgenden Korrektur der Schräglage die Vorderachse durch allmähliche Druckangleichung der rechten und linken Luftfederbälge folgen kann.

Ein weiteres Steuerventil, das in der DE 43 27 763 A1 die Bezugsziffer 27 erhalten hat, ist für die Kneelingfunktion also dem einseitigen Absenken, erforderlich. Sofern dieses Steuerventil in Sperrstellung ist, ist eine individuelle Steuerung der in der Figur DE 43 27 763 A1 dargestellten rechten Fahrzeugseite möglich. Die dort eingezeichnete Drossel dient der Verbindung der rechten und linken Fahrzeugseite, und wird für den Druckausgleich benötigt.

Bei der bekannten Vorrichtung ist es möglich, daß bei sehr lange anhaltenden Kurvenfahrten oder sehr lange anhaltenden Fahrten auf einer schrägen Straße eine unerwünschte Umverteilung des Luftvolumens von der kurvenäußeren Seite zur kurveninneren Seite stattfindet bzw. von der Seite, die tiefer angeordnet ist zu der Seite, die weiter oben angeordnet ist. Hierdurch nimmt die Fahrzeugneigung zu. Nach Abschluß der Kurvenfahrt bzw. nach Erreichen einer waagerechten Strecke ist es nötig, daß die Luft wieder über die Drosselstelle zur anderen Seite gelangt, was eine gewisse Zeit benötigt, die u.U. größer sein kann als die Zeit, bis zu der die Regelung der Luftfederbälge, die an der hinteren Achse angeordnet sind, eine entsprechende Niveauausgleichung durchführen. Sobald dann auch an der Vorderachse der Druck beidseitig ausgeglichen ist, ist es erneut erforderlich an der Hinterachse eine Korrektur durchzufuhren. Hierdurch wird relativ viel Druckluft verbraucht.

Es ist somit die Aufgabe der vorliegenden Erfindung bei gattungsgemäßen Luftfederungsanlagen einen schnellen Druckausgleich zu ermöglichen, um so wenig Druckluft zu verbrauchen und den Fahrkomfort zu erhöhen.

Gelöst wird diese Aufgabe durch die Merkmale des Anspruchs 1.

Durch diese Maßnahme ist ein schneller Ausgleich der jeweiligen Drücke in den Luftfederbälgen die in der Nähe der Vorderachse des Fahrzeuges angeordnet sind möglich, so daß eine schnelle Niveauregulierung bzw. ein schneller Niveauausgleich stattfindet. Im Rahmen dieser Erfindung umfaßt der Begriff Luftfederbalg auch den Begriff Tragebalg. Ein drosselfreies Verbindungsmittel zwischen den Luftfederbälgen bedeutet insbesondere, daß der Wirkquerschnitt des Verbindungsmittels so groß ist, daß die jeweiligen Luftvolumina im wesentlichen ohne bemerkbare Zeitverzögerung ausgeglichen werden. Es ist insbesondere kein Element in dem Verbindungsmittel vorhanden, das den Fluß von Luft bzw. Druckluft merkbar hindert.

Vorteilhafte Ausgestaltungen der Erfindung sind in den abhängigen Ansprüchen enthalten.

Vorzugsweise umfaßt das Verbindungsmittel ein erstes Ventil, insbesondere ein erstes Magnetventil. Durch diese Maßnahme ist es möglich eine Kneelingfunktion zu erzielen, da so durch Trennung der Vorderachsen-Luftfederbälge ein getrenntes Heben oder Senken des Fahrzeuges möglich istund zwar insbesondere ein einseitiges Absenken, also eine Kneelingfunktion möglich ist.

Vorzugsweise ist das erste Ventil ein 2/2-Wege-Ventil, das in einer ersten Steuerstellung durchschaltet und in einer zweiten Steuerstellung sperrt.

Ferner vorzugsweise umfaßt das Verbindungsmittel eine oder mehrere Bohrungen und/oder Zuleitungen. Die Zuleitungen sind hierbei insbesondere vorzugsweise Rohre oder Schläuche.

Wenn vorzugsweise der Luftkreis wenigstens ein zweites Ventil umfaßt, ist eine besonders einfache Steuerung des Drucks in den Luftfederbälgen möglich. Wenn vorzugsweise das zweite Ventil ein 3/2-Wege-Ventil ist, ist eine besonders einfache Ventileinrichtung zu realisieren. Hierbei ist bevorzugterweise in einer ersten Steuerstellung Druckluft zu den Balgen lieferbar, in einer zweiten Steuerstellung eine Entlüftung möglich und eine dritte Steuerstellung eine Sperrstellung oder eine Schließstellung. Bei Verwendung von zwei zweiten Ventilen werden vorzugsweise zwei 2/2-Wege-Ventile verwendet, wobei das eine zweite Ventil eine Schließstellung und eine Steuerstellung aufweist und das zweite zweite Ventil zwei Steuerstellungen aufweist.

Vorzugsweise zweigt eine Zuleitung oder eine Bohrung zu einem der Luftfederbälge zwischen dem ersten Ventil und dem wenigstens einen zweiten Ventil ab. Durch diese Maßnahme ist eine besonders einfach zu realisierende Kneelingfunktion ermöglicht.

Bei der beschriebenen Anordnung der Ventile in einer Ventileinrichtung, die vorzugsweise in einem Gehäuse angeordnet sind, werden übliche Verbindungselemente verwendet, um Zuleitungen mit Bohrungen zu verbinden.

Die Erfindung wird nachstehend ohne Beschrankung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird. Es zeigt:

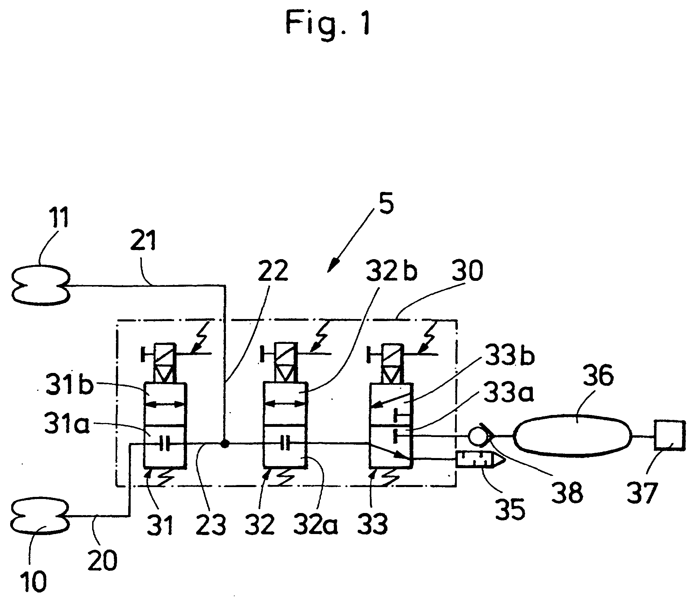

Fig. 1 schematisch einen vorderen Kreis einer Luftfederungsanlage eines Omnibusses.

Fig. 1 zeigt schematisch einen Luftkreis 5 einer Luftfederungsanlage für Omnibusse.

Es sind Luftfederbälge 10 und 11 dargestellt, die auch als Tragebälge bezeichnet werden. Die Luftfederbalge 10 und 11 sind zwischen der Vorderachse und einem Wagenkasten angeordnet und tragen den Wagenkasten. In der Figur ist allerdings weder die Vorderachse noch der Wagenkasten dargestellt. Der Luftfederbalg 10 ist auf der linken Seite des Fahrzeugs angeordnet und der Luftfederbalg 11 auf der rechten Seite des Fahrzeugs.

In Fig. 1 sind ferner in einer Ventileinrichtung drei Magnetventile 31, 32 und 33 dargestellt, die über mit einem Hochspannungssymbol gekennzeichneten Leitungen betreibbar sind. Die Magnetventile 31 und 32 weisen eine Schließstellung 31a bzw. 32a auf und eine Steuerstellung 31b bzw. 32b. In der Schließstellung 31a bzw. 32a ist die Druckluftzufuhr bzw. -abfuhr gesperrt wohingegen in der Steuerstellung 31b bzw. 32b Druckluft durch das jeweilige Ventil fließen kann. Die Ventile 31 und 32 sind im bestromten Fall in Steuerstellung 31b bzw. 32b und im unbestromten Fall in Schließstellung 31a und 32a. Ferner ist ein drittes Ventil 33 dargestellt, das eine Steuerstellung 33a und eine Steuerstellung 33b aufweist. In der Steuerstellung 33a findet eine Entlüftung der Leitungen bzw. Bohrungen über eine Entlüftung 35 statt. In der Steuerstellung 33b werden die zuerst genannten Komponenten des Luftkreises je nach Stellung der Ventile 31 und 32 mit Druckluft versorgt. Die Druckluftversorgung findet über einen Kompressor 37, einen Druckluftvorratsbehälter 36 und ein Rückschlagventil 38 statt.

Bei Geradeaus-Fahrt auf einer waagerechten Strecke sollten das Niveau, das durch die Luftfederbälge 10 und 11 gewährleitet ist gleich hoch sein. Dies wird durch gleich große Drücke in den Luftfederbälgen 10 und 11 gewährleistet. Dieses geschieht durch Druckluftbeaufschlagen der Ventile von dem Druckluftvorratsbehälter 36 oder Entlüften über die Entlüftung 35. Beim Beaufschlagen mit Druckluft wird das Ventil 33 in Steuerstellung 33b geschaltet, also bestromt, und ferner die Ventile 32 und 31 bestromt. Hierdurch wird Druckluft von dem Kompressor über den Druckluftvorratsbehälter über die Ventileinrichtung 30 bis zu den Luftfederbälgen gefördert. Zum enrsprechenden Entlüften sind die Ventile 31 und 32 bestromt und das Ventil 33 nicht bestromt. Auf diese Art und Weise können die Luftfederbälge 10 und 11 der Vorderachse gesteuert bzw. geregelt werden.

Bei Aktivierung der Kneelingfunktion wird das Ventil 31 nicht bestromt, so daß dieses Ventil die Schließstellung 31a einnimmt. Nun kann die rechte Seite des Fahrzeugs bzw. der rechte Luftfederbalg 11 individuell gesteuert oder geregelt werden.

Um nicht ständig Druckluft in den Luftfederbälgen von dem Kompressor 37 zur Verfügung stellen zu müssen bzw. keine dauernde Entlüftung stattfinden zu lassen, wird das Ventil 32 in die Schließstellung 32a gebracht.

Grundsätzlich sind die Vorderachsluftfederbälge 10 und 11 im Normalzustand voneinander getrennt. Hierdurch kommt es schon bei einer Fahrt oder Stand auf einer schrägen Fläche bzw. in einer Kurvenfahrt nicht zu einer Niveauänderung bzw. einer geringeren Niveauänderung des Fahrzeugs. Außerdem ist es durch eine weitere Regelung bzw. Steuerung möglich etwaige Niveauunterschiede während einer Kurvenfahrt oder bei nicht waagerechter bzw. horizontaler Fahrbahn durchzuführen, so daß das Fahrzeug selbst nicht in Schräglage oder weniger in Schräglage gerät.

Ferner ist es bevorzugt, zur Vermeidung interner Verspannungen bzw. Spannungen des Fahrzeugs das Ventil 31 grundsätzlich zu bestromen, wenn an der Hinterachse eine Regelanforderung vorliegt. Hierdurch wird die Vorderachse in die Lage versetzt, den Höhenstandsänderungen bzw. Niveauänderungen der Hinterachse zu folgen. Ferner ist es durch die Erfindung moglich, durch Bestromung des Ventils 31 einen schnellen Höhenstandsausgleich bzw. einen schnellen Niveauausgleich zu gewährleisten. Durch die dargestellte Schaltungslogik ist es möglich unerwünschte Luftvolumenverschiebungen zwischen der rechten und linken Tragbalgseite bzw. Luftfederbalgseite zu unterbinden. Hierdurch werden unerwünschte Schiefstände des Fahrzeugs und resultierende Korrekturregelungen bzw. -steuerungen vermieden, wodurch der Komfort verbessert wird und der Luftverbrauch reduziert wird.

Bei Undichtigkeiten an einer Balgseiten ist es möglich in vorgebbaren insbesondere auch zyklischen Abständen und in Abhängigkeit vom Fahrzustand das Ventil 31 für einen wählbaren Zeitraum zu bestromen, um an der Vorderachse einen Druckausgleich herbeizuführen.

### Bezugszeichenliste

- 5: Luftkreis
- 10: Luftfederbalg links
- 11: Luftfederbalg rechts
- 20: Zuleitung für linken Luftfederbalg
- 21: Zuleitung für rechten Luftfederbalg
- 22: Bohrung
- 23: Bohrung
- 30: Ventileinrichtung
- 31: Magnetventil
- 31a: Schließstellung
- 31b: Steuerstellung
- 32: Magnetventil
- 32a: Schließstellung
- 32b: Steuerstellung
- 33: Magnetventil
- 33a: Steuerstellung
- 33b: Steuerstellung
- 35: Entlüftung
- 36: Druckluftvorratsbehälter
- 37: Kompressor
- 38: Rückschlagventil

## Patentansprüche

1. Luftfederungsanlage für Fahrzeuge mit einem Luftkreis (5) für eine Vorderachse des Fahrzeugs, dem wenigstens zwei Luftfederbälge (10, 11), die zwischen der Vorderachse und einem Fahrzeug-Aufbau des Fahrzeugs angeordnet sind, zugeordnet sind, wobei die Luftfederbälge (10, 11) zum Ausgleich des in dem jeweiligen Luftfederbalg vorherrschenden Drucks über ein Verbindungsmittel (20, 21, 22, 23, 31) verbunden sind, wobei das Verbindungsmittel (20, 21, 22, 23, 31) ein erstes Ventil (31), insbesondere ein erstes Magnetventil, umfasst und wobei das erste Ventil (31) in einer Steuerstellung (31b) durchschaltet und in einer Schließstellung (31a) sperrt, **dadurch gekennzeichnet, dass** das Verbindungsmittel (20, 21, 22, 23, 31) drosselfrei ist und dass das erste Ventil (31) derart steuerbar ist, dass das erste Ventil (31) im Normalzustand in der Schließstellung (31a) ist, und dass das erste Ventil (31) für einen Niveauausgleich der Vorderachse oder bei einer Regelanforderung einer Hinterachse des Fahrzeugs in der Steuerstellung (31b) ist.

2. Luftfederungsanlage nach Anspruch 1, **dadurch gekennzeichnet, dass** das erste Ventil (31) für einen, vorzugsweise wählbaren, Zeitraum in der Steuerstellung (31 b) ist.

3. Luftfederungsanlage nach Anspruch 1 oder 2, **dadurch gekennzeichnet, dass** das erste Ventil (31) in, insbesondere vorgebbaren und/oder zyklischen, Abständen in der Steuerstellung (31 b) ist.

4. Luftfederungsanlage nach einem der Ansprüche 1 bis 3, **dadurch gekennzeichnet, dass** das erste Ventil (31) ein 2/2-Wege-Ventil ist.

5. Luftfederungsantage nach einem oder mehreren der Ansprüche 1 bis 4, **dadurch gekennzeichnet, dass** das Verbindungsmittel (20, 21, 22, 23, 31) wenigstens eine Bohrung (22,23) und/oder Zuleitungen (20, 21) aufweist.

6. Luftfederungsanlage nach einem oder mehreren der Ansprüche 1 bis 5, **dadurch gekennzeichnet, dass** der Luftkreis (5) wenigstens ein zweites Ventil (32, 33) umfasst.

7. Luftfederungsanlage nach Anspruch 6, **dadurch gekennzeichnet, dass** eine Zuleitung (21) oder eine Bohrung (22) zu einem der Luftfederbälge (11) zwischen dem ersten Ventil (31) und dem wenigstens einen zweiten Ventil (32) abzweigt.

## Claims

1. Air spring system for vehicles including one air circuit (5) for a front axle of the vehicle, with which at least two air spring bellows (10, 11) are associated, which are disposed between the front axle and a vehicle body of the vehicle, with said air spring bellows (10, 11) being connected via connecting means (20, 21, 22, 23, 31) for equalisation of the pressure prevailing in the respective air spring bellows, wherein said connecting means (20, 21, 22, 23, 31) includes a first valve (31), particularly a first solenoid valve, and wherein said first valve (31) permits through-flow in a control position (31 b) and blocks in a closed position (31a), **characterised in that** said connecting means (20, 21, 22, 23, 31) is free of throttles and that said first valve (31) is adapted for control in such a way that said first valve (31 ), in the normal state, is in its closed position (31 a) and that said first valve (31) is in the control position (31 b) for a level compensation of the front axle or in the event of a control demand from a rear axle of the vehicle.

2. Air spring system according to Claim 1, **characterised in that** said first valve (31) is in the control position (31 b) for a defined period, preferably a period that can be selected.

3. Air spring system according to Claim 1 or 2, **characterised in that** said first valve (31) is in the control position (31b) in intervals, in particular in intervals that can be predetermined and/or that are cyclic.

4. Air spring system according to any of the Claims 1 to 3, **characterised in that** said first valve (31) is a 2/2-way valve.

5. Air spring system according to one or several of the Claims 1 to 4, **characterised in that** said connecting means (20, 21, 22, 23, 31) comprises at least one bore (22, 23) and/or feeder line (20, 21).

6. Air spring system according to one or several of the Claims 1 to 5, **characterised in that** said air circuit (5) comprises at least one second valve (32, 33).

7. Air spring system according to Claim 6, **characterised in that** a feeder line (21) or a bore (22) branches off to one of said air spring bellows (11) between said first valve (31) and said at least one second valve (32).

## Revendications

1. Système à ressort pneumatique pour véhicules, comprenant un circuit d'air (5) pour un essieu avant du véhicule, auquel au moins deux soufflets de ressort pneumatique (10, 11) sont affectés, qui sont disposés entre l'essieu avant et une carrosserie du véhicule, auxdits soufflets de ressort pneumatique (10, 11) étant reliés via des moyens de connexion (20, 21, 22, 23, 31) afin d'égaliser la pression régnante dans les soufflets de ressort pneumatique respectifs, dans lequel lesdits moyens de connexion (20, 21, 22, 23, 31) comprennent une première soupape (31), en particulier une première soupape électromagnétique, et dans lequel ladite première soupape (31) permet le passage en une position de commande (31b) et est bloquant en une position fermée (31a), **caractérisé en ce que** lesdits moyens de connexion (20, 21, 22, 23, 31) sont libres de clapets de réglage, et **en ce que** ladite première soupape (31) est apte à être commandée d'une telle manière, que ladite première soupape (31), en état normal, se trouve en sa position fermée (31a), et que ladite première soupape (31 ) se trouve en sa position de commande (31b) pour une compensation de niveau de l'essieu avant ou au cas d'une demande de commande d'un essieu arrière du véhicule.

2. Système à ressort pneumatique selon la revendication 1, **caractérisé en ce que** ladite première soupape (31) se trouve en sa position de commande (31 b) pour une période définie, de préférence une période choisissable.

3. Système à ressort pneumatique selon la revendication 1 or 2, **caractérisé en ce que** ladite première soupape (31) se trouve en sa position de commande (31b) aux intervalles, en particulier aux intervalles qu'on peut prédéterminer et/ou qui sont cycliques.

4. Système à ressort pneumatique selon une quelconque des revendications 1 à 3, **caractérisé en ce que** ladite première soupape (31) est une soupape à 2/2 voies.

5. Système à ressort pneumatique selon une ou plusieurs des revendications 1 à 4, **caractérisé en ce que** lesdits moyens de connexion (20, 21, 22, 23, 31) comprennent au moins un alésage (22, 23) et/ou un conduit d'alimentation (20, 21).

6. Système à ressort pneumatique selon une ou plusieurs des revendications 1 à 5, **caractérisé en ce que** ledit circuit d'air (5) comprend au moins une deuxième soupape (32, 33).

7. Système à ressort pneumatique selon la revendication 6, **caractérisé en ce qu'**un conduit d'alimentation (21) ou un alésage (22) se branche vers un desdits soufflets de ressort pneumatique (11 ) entre ladite première soupape (31 ) et ladite au moins une soupape (32).
